# EUROPEAN PATENT APPLICATION

(11) **EP 4 124 170 A1**
(43) Date of publication of application: **25.01.2023**
(21) Application number: 20925902.7
(22) Date of filing: 19.03.2020
(51) Int. Cl.: H04W 92/18, H04W 4/46, H04W 28/04, H04W 52/02

(54) **TERMINAL AND COMMUNICATION METHOD**

(71) Applicant: NTT DOCOMO, INC., Chiyoda-Ku Tokyo 100-6150 (JP)
(72) Inventor: YOSHIOKA, Shohei, Tokyo 100-6150 (JP); NAGATA, Satoshi, Tokyo 100-6150 (JP)
(74) Representative: Hoffmann Eitle
(86) International application number: PCT/JP2020/012531
(87) International publication number: WO 2021/186731

(57) **Abstract**

A terminal includes a receiving unit configured to receive data from another terminal, a control unit configured to control a response of retransmission processing of the data, based on whether the terminal is in a power saving state or in a normal state, and a transmitting unit configured to transmit, to the another terminal, the response of retransmission processing of the data.

## Description

### Technical Field

The present invention relates to a terminal and a communication method in a wireless communication system.

### Background Art

In LTE (Long Term Evolution) and successor systems of LTE (for example, LTE-A (LTE Advanced), NR (New Radio) (also referred to as 5G)), D2D (Device to Device) technology in which terminals communicate directly with each other without using a base station has been discussed (for example, see Non-Patent Document 1).

D2D reduces traffic between a terminal and a base station, and enables communication between terminals even when the base station becomes unavailable during a disaster. In 3GPP (3rd Generation Partnership Project), D2D is referred to as a "sidelink", but in this specification, D2D, which is a more general term, is used. However, in the explanation about the embodiment described later, the term "sidelink" will also be used as necessary.

D2D communication is roughly divided into D2D discovery for discovering other terminals that can communicate, and D2D communication (also referred to as inter-terminal direct communication and the like) for directly communicating between terminals. Hereinafter, when D2D communication, D2D discovery, and the like are not particularly distinguished from each other, they will be simply referred to as D2D. A signal transmitted and received by D2D will be referred to as a D2D signal. Various use cases of services relating to V2X (Vehicle to Everything) in NR are being discussed (for example, Non-Patent Document 2).

### Prior Art Document

### Non-Patent Document

Non-Patent Document 1: 3GPP TS 38.211 V16.0.0(2019-12)
Non-Patent Document 2: 3GPP TR 22.886 V15.1.0(2017-03)

### Summary of the Invention

### Problem to be Solved by the Invention

In inter-terminal direct communication of NR, an operation for reporting an HARQ (Hybrid automatic repeat request) response of sidelink to the base station is supported. In the inter-terminal direct communication of NR, power saving operation has been discussed with respect to random resource selection or partial sensing for a case where a terminal selects a resource. However, in the power saving of sidelink, an operation of power saving with respect to an operation of HARQ response has not been specified.

The present invention has been made in view of the above problems, and it is an object of the present invention to reduce the power consumption for an operation of HARQ (Hybrid automatic repeat request) response in inter-terminal direct communication.

### Means for Solving Problem

According to the disclosed technique, a terminal is provided that includes a receiving unit configured to receive data from another terminal, a control unit configured to control a response of retransmission processing of the data, based on whether the terminal is in a power saving state or in a normal state, and a transmitting unit configured to transmit, to the another terminal, the response of retransmission processing of the data.

### Effect of the Invention

According to the disclosed technique, the power consumption for an operation of HARQ (Hybrid automatic repeat request) response in inter-terminal direct communication can be reduced.

### Brief Description of Drawings

FIG. 1 is a drawing illustrating V2X;
FIG. 2 is a drawing illustrating an example (1) of transmission mode of V2X;
FIG. 3 is a drawing illustrating an example (2) of transmission mode of V2X;
FIG. 4 is a drawing illustrating an example (3) of transmission mode of V2X;
FIG. 5 is a drawing illustrating an example (4) of transmission mode of V2X;
FIG. 6 is a drawing illustrating an example (5) of transmission mode of V2X;
FIG. 7 is a drawing illustrating an example (1) of communication type of V2X;
FIG. 8 is a drawing illustrating an example (2) of communication type of V2X;
FIG. 9 is a drawing illustrating an example (3) of communication type of V2X;
FIG. 10 is a sequence diagram illustrating an operation example (1) of V2X;
FIG. 11 is a sequence diagram illustrating an operation example (2) of V2X;
FIG. 12 is a sequence diagram illustrating an operation example (3) of V2X;
FIG. 13 is a sequence diagram illustrating an operation example (4) of V2X;
FIG. 14 is a drawing illustrating an example (1) of HARQ response according to the embodiment of the present invention;
FIG. 15 is a drawing illustrating an example (2) of HARQ response according to the embodiment of the present invention;
FIG. 16 is a figure illustrating an example of resource pool according to the embodiment of the present invention;
FIG. 17 is a drawing illustrating an example of a functional configuration of a base station 10 according to the embodiment of the present invention;
FIG. 18 is a drawing illustrating an example of a functional configuration of a terminal 20 according to the embodiment of the present invention; and
FIG. 19 is a drawing illustrating an example of a hardware configuration of the base station 10 or the terminal 20 according to the embodiment of the present invention.

### Mode for Carrying Out the Invention

An embodiment of the present invention will be hereinafter described with reference to drawings. The embodiment described below is an example, and the embodiment to which the present invention is applied is not limited to the following embodiment.

In the operation of a wireless communication system according to embodiments of the present invention, conventional techniques are used as appropriate. However, an example of conventional techniques include conventional LTE, but is not limited to the conventional LTE. In addition, the term "LTE" used in this specification has a broad meaning including LTE-Advanced and specifications newer than LTE-Advanced (e.g., NR) or wireless LAN (Local Area Network) unless otherwise specified.

In the embodiments of the present invention, the duplex method may be a TDD (Time Division Duplex) system, an FDD (Frequency Division Duplex) system, or others (for example, Flexible Duplex and the like).

Further, in the embodiment of the present invention, "to configure" a radio parameter or the like may be that a predetermined value is configured in advance (preconfigured), or may be that a radio parameter notified from the base station 10 or the terminal 20 is configured.

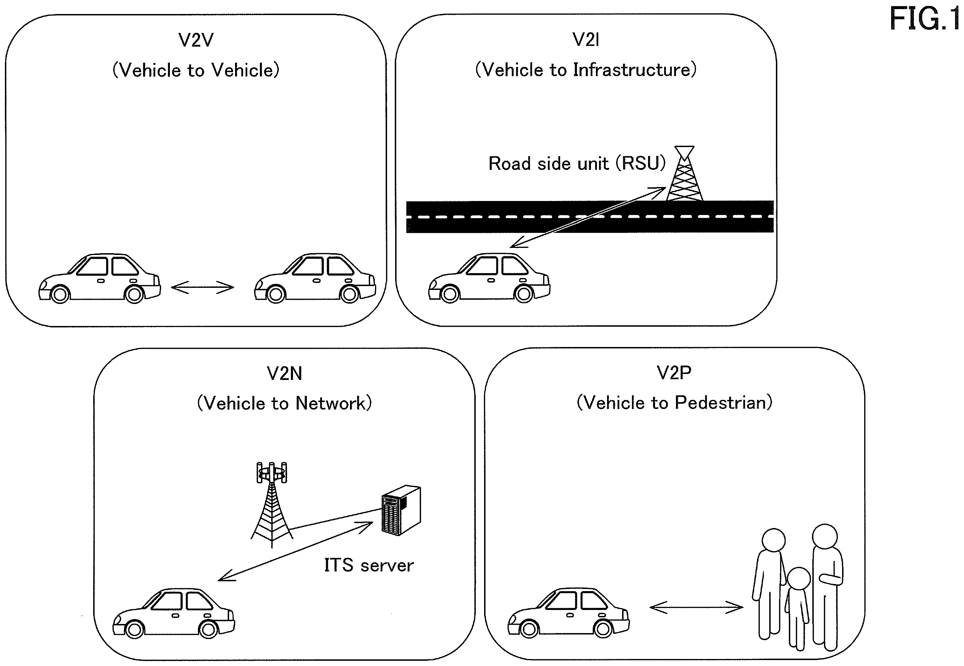

FIG. 1 is a drawing illustrating V2X. In 3GPP, it is studied to implement V2X (Vehicle to Everything) or eV2X (enhanced V2X) by extending the D2D function, and V2X and eV2X are being fixed as specifications. As illustrated in FIG. 1, V2X is a part of ITS (Intelligent Transport Systems) and is a general term including V2V (Vehicle to Vehicle) meaning a form of communication performed between vehicles, a V2I (Vehicle to Infrastructure) meaning a form of communication performed between a vehicle and a road-side unit (RSU) installed at a roadside, a V2N (Vehicle to Network) meaning a form of communication performed between a vehicle and an ITS server, and a V2P (Vehicle to Pedestrian) meaning a form of communication performed between a vehicle and a mobile terminal carried by a pedestrian.

In 3GPP, V2X using LTE or NR cellular communication and inter-terminal communication is being studied. V2X using cellular communication is also referred to as cellular V2X. NR-based V2X is being studied to achieve a higher capacity, a lower delay, a higher reliability, and QoS (Quality of Service) control.

It is anticipated that studies not limited to 3GPP specifications will be advanced in the future for LTE or NR-based V2X. It is expected to study, for example, ensuring interoperability, reducing costs by implementing higher layers, methods for using or switching multiple RATs (Radio Access Technology), handling regulations in various countries, data acquisition, distribution, database management, and usage methods for LTE or NR-based V2X platforms.

In the embodiment of the present invention, a communication apparatus is mainly assumed to be mounted on a vehicle, but the embodiment of the present invention is not limited thereto. For example, the communication apparatus may be a terminal held by a person, or the communication apparatus may be an apparatus mounted on a drone or an aircraft, the communication apparatus may be a base station, an RSU, a relay station (relay node), a terminal having scheduling capability, or the like.

SL (Sidelink) may be distinguished from UL (Uplink) or DL (Downlink) based on any one of or a combination of items (1) to (4) below. SL may be given a different name.
1) Time domain resource assignment
2) Frequency domain resource assignment
3) Reference synchronization signals (including SLSS (Sidelink Synchronization Signal)
4) Reference signal used for path loss measurement for transmission power control.

OFDM (Orthogonal Frequency Division Multiplexing) techniques for SL or UL may be any one of OFDM techniques including CP-OFDM (Cyclic-Prefix OFDM), DFT-S-OFDM (Discrete Fourier Transform-Spread-OFDM), OFDM without transform precoding, and OFDM with transform precoding.

In SL of LTE, Mode 3 and Mode 4 are defined for SL resource assignment to the terminal 20. In Mode 3, transmission resources are dynamically assigned by DCI (Downlink Control Information) transmitted from the base station 10 to the terminal 20. In Mode 3, SPS (Semi Persistent Scheduling) is also possible. In Mode 4, terminal 20 autonomously selects a transmission resource from the resource pool.

A slot in the embodiment of the present invention may be read as a symbol, a mini-slot, a subframe, a radio frame, a TTI (Transmission Time Interval), or the like. Further, a cell in the embodiment of the present invention may be read as a cell group, a carrier component, a BWP, a resource pool, a resource, a RAT (Radio Access Technology), a system (including a wireless LAN), or the like.

In the embodiment of the present invention, the terminal 20 is not limited to the V2X terminal, and may be any type of terminal that performs D2D communication. For example, the terminal 20 may be a terminal owned by a user such as a smartphone, or may be an IoT (Internet of Things) device such as a smart meter.

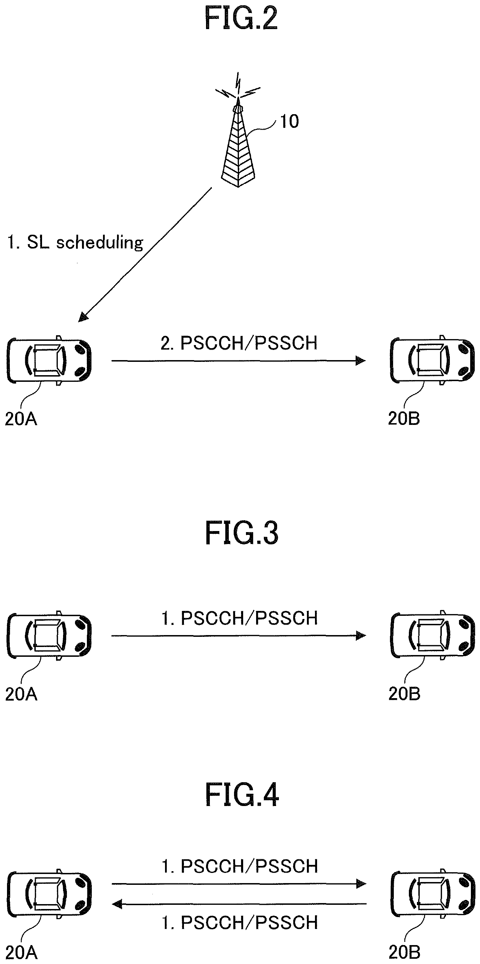

FIG. 2 is a drawing illustrating an example (1) of transmission mode of V2X. In a sidelink communication transmission mode illustrated in FIG. 2, in step 1, the base station 10 transmits sidelink scheduling to a terminal 20A. Subsequently, the terminal 20A transmits a PSCCH (Physical Sidelink Control Channel) and a PSSCH (Physical Sidelink Shared Channel) to a terminal 20B based on the received scheduling (step 2). The transmission mode of the sidelink communication illustrated in FIG. 2 may be referred to as a sidelink transmission mode 3 in LTE. The sidelink transmission mode 3 in LTE performs Uu-based sidelink scheduling. Uu is a radio interface between UTRAN (Universal Terrestrial Radio Access Network) and UE (User Equipment). Note that the transmission mode of sidelink communication illustrated in FIG. 2 may be referred to as a sidelink transmission mode 1 in NR.

FIG. 3 is a drawing illustrating an example (2) of transmission mode of V2X. In the transmission mode of sidelink communication as illustrated in FIG. 3, in step 1, the terminal 20A uses an autonomously selected resource to transmit a PSCCH and an PSSCH to the terminal 20B. The transmission mode of the sidelink communication as illustrated in FIG. 3 may be referred to as a sidelink transmission mode 4 of LTE. In the sidelink transmission mode 4 of LTE, the UE executes the resource selection on its own.

FIG. 4 is a drawing illustrating an example (3) of transmission mode of V2X. In the transmission mode of the sidelink communication as illustrated in FIG. 4, in step 1, the terminal 20A uses an autonomously selected resource to transmit a PSCCH and a PSSCH to the terminal 20B. Likewise, the terminal 20B uses an autonomously selected resource to transmit a PSCCH and a PSSCH to the terminal 20A (step 1) . The transmission mode of the sidelink communication as illustrated in FIG. 4 may be referred to as sidelink transmission mode 2a or sidelink resource allocation mode 2 in NR. In the sidelink transmission mode 2 in NR, the terminal 20 executes the resource selection on its own.

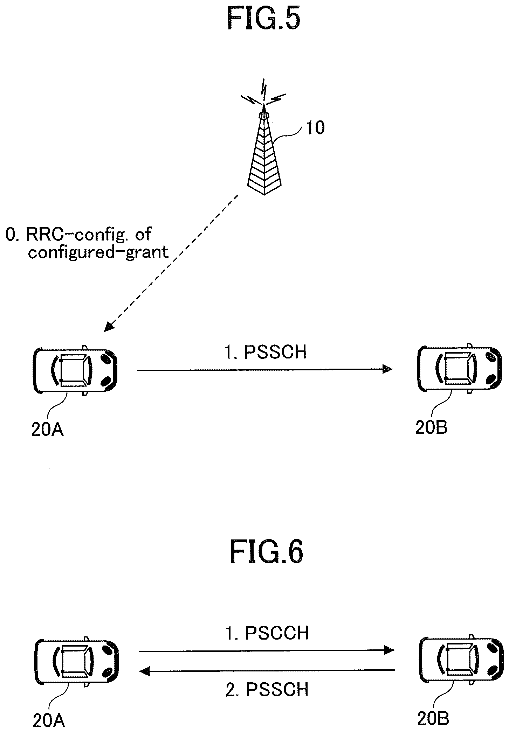

FIG. 5 is a drawing illustrating an example (4) of transmission mode of V2X. In the transmission mode of the sidelink communication as illustrated in FIG. 5, in step 0, the base station 10 transmits a grant of a sidelink via an RRC (Radio Resource Control) configuration to the terminal 20A. Subsequently, the terminal 20A transmits a PSSCH to the terminal 20B on the basis of the received resource pattern (step 1). The transmission mode of the sidelink communication as illustrated in FIG. 5 may be referred to as a sidelink transmission mode 2c in NR.

FIG. 6 is a drawing illustrating an example (5) of transmission mode of V2X. In the transmission mode of the sidelink communication as illustrated in FIG. 6, in step 1, the terminal 20A transmits scheduling of a sidelink via a PSCCH to the terminal 20B. Subsequently, the terminal 20B transmits a PSSCH to the terminal 20A on the basis of the received scheduling (step 2). The transmission mode of the sidelink communication as illustrated in FIG. 6 may be referred to as a sidelink transmission mode 2d in NR.

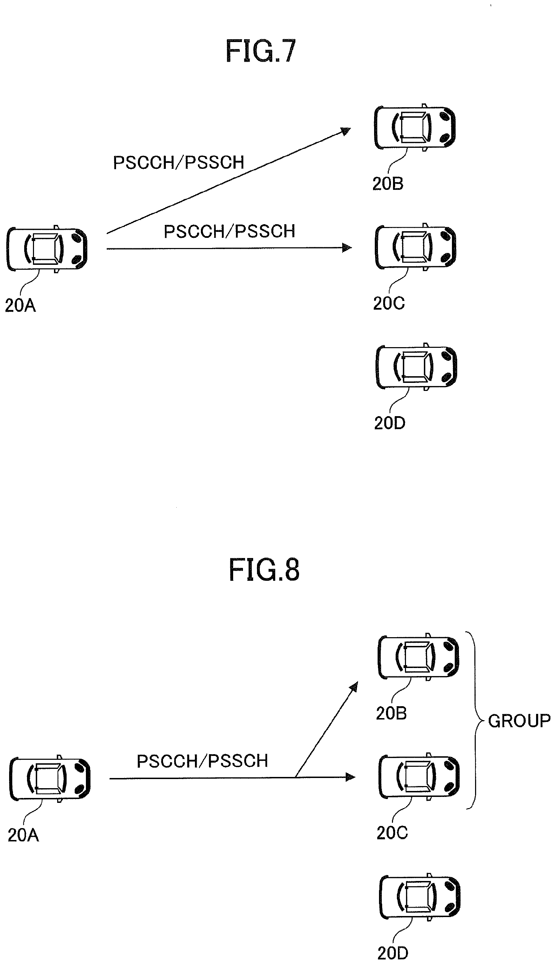

FIG. 7 is a drawing illustrating an example (1) of communication type of V2X. The communication type of the sidelink as illustrated in FIG. 7 is unicast. The terminal 20A transmits a PSCCH and a PSSCH to the terminal 20. In the example as illustrated in FIG. 7, the terminal 20A performs unicast to the terminal 20B, and performs unicast to the terminal 20C.

FIG. 8 is a drawing illustrating an example (2) of communication type of V2X. The communication type of the sidelink as illustrated in FIG. 8 is a groupcast. The terminal 20A transmits a PSCCH and a PSSCH to a group to which one or multiple terminals 20 belong. In the example as illustrated in FIG. 8, the group includes the terminal 20B and the terminal 20C, and the terminal 20A performs groupcast to the group.

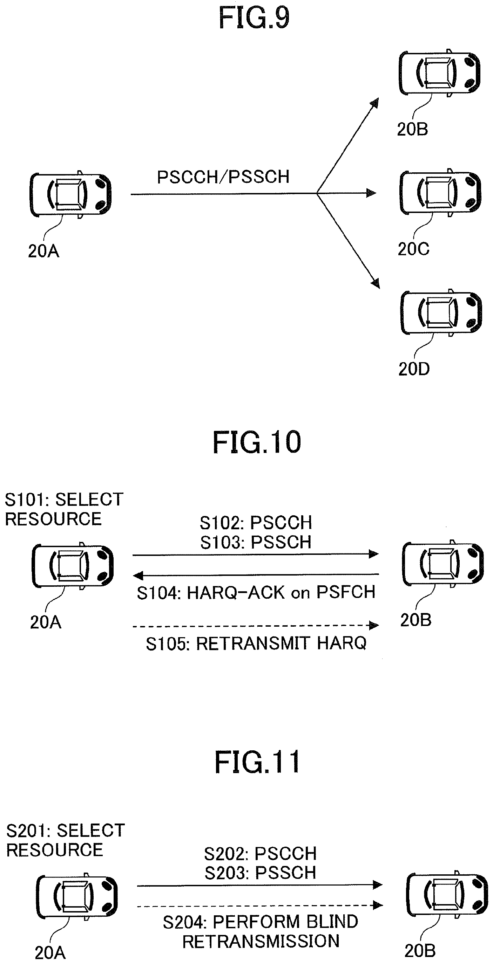

FIG. 9 is a drawing illustrating an example (3) of communication type of V2X. The communication type of the sidelink as illustrated in FIG. 9 is broadcast. The terminal 20A transmits a PSCCH and a PSSCH to one or multiple terminals 20. In the example as illustrated in FIG. 9, the terminal 20A performs broadcast to the terminal 20B, the terminal 20C, and the terminal 20D. The terminal 20A as illustrated in FIG. 7 to FIG. 9 may be referred to as a header UE (header-UE).

In the NR-V2X, it is expected that a HARQ (Hybrid automatic repeat request) is supported by unicast and groupcast of a sidelink. Further, in the NR-V2X, an SFCI (Sidelink Feedback Control Information) including a HARQ response is included. Further, it is considered to transmit an SFCI via a PSFCH (Physical Sidelink Feedback Channel).

In the following explanation, a PSFCH is used in the transmission of a HARQ-ACK on a sidelink, which is an example. For example, a PSCCH may be used to transmit a HARQ-ACK on a sidelink, a PSSCH may be used to transmit a HARQ-ACK on a sidelink, or other channels may be used. A HARQ-ACK may be transmitted on a sidelink.

Hereinafter, for the sake of convenience, information in general reported by the terminal 20 in a HARQ is referred to as a HARQ-ACK. This HARQ-ACK may also be referred to as HARQ-ACK information. More specifically, a codebook applied to the HARQ-ACK information reported from the terminal 20 to the base station 10 and the like is referred to as a HARQ-ACK codebook. The HARQ-ACK codebook specifies a bit string of the HARQ-ACK information. In addition to an ACK, a NACK is also transmitted by "HARQ-ACK".

FIG. 10 is a drawing illustrating an example (1) of a configuration and an operation of the wireless communication system according to the embodiment of the present invention. As illustrated in FIG. 10, the wireless communication system according to the embodiment of the present invention includes a terminal 20A and a terminal 20B. Actually, there can be many user equipments, but FIG. 10 illustrates the terminal 20A, and terminal 20B as examples.

Hereinafter, when the terminals 20A, 20B, and the like are not particularly distinguished, they are simply referred to as a "terminal 20" or a "user equipment". FIG. 10 illustrates an example in which both the terminal 20A and the terminal 20B are within a coverage, but the operation according to the embodiment of the present invention can also be applied to the case where the other terminal 20B is out of the coverage

As described above, in the present embodiment, the terminal 20 is an apparatus mounted on a vehicle such as, for example, an automobile, and has cellular communication function and a sidelink function as a UE in LTE or NR. Further, the terminal 20 may be a general mobile terminal (a smartphone or the like). Further, the terminal 20 may be an RSU. The RSU may be a UE type RSU having a UE function, or may be a gNB type RSU having a function of a base station.

Note that the terminal 20 does not have to be an apparatus accommodated in a single casing, and for example, even if various sensors are distributed in the vehicle, an apparatus including the various sensors is the terminal 20.

Processing content of transmission in the sidelink performed by the terminal 20 is basically the same as the processing content of the UL transmission in LTE or NR. For example, the terminal 20 scrambles a code word of transmission data, modulates it to generate complex-valued symbols, maps the complex-valued symbols (transmission signal) to 1 or 2 layers, and performs precoding. Then, the precoded complex-valued symbols are mapped to resource elements to generate transmission signals (e.g., complex-valued time-domain SC-FDMA signals) and transmit the transmission signals through each antenna port.

The base station 10 has a function of cellular communication as the base station 10 in LTE or NR, and a function of enabling the terminal 20 to perform communication according to the present embodiment (for example, resource pool configuration, resource assignment, and the like) . Further, the base station 10 may be an RSU (gNB type RSU).

In the wireless communication system according to the present embodiment according to the embodiment of the present invention, a signal waveform used by the terminal 20 for SL or UL may be OFDMA, SC-FDMA, or other signal waveform.

In step S101, the terminal 20A autonomously selects a resource used for a PSCCH and a PSSCH from a resource selection window having a predetermined period. The resource selection window may be configured by the base station 10 for the terminal 20.

In step S102 and step S103, the terminal 20A uses the resource autonomously selected in step S101 to transmit SCI (Sidelink Control Information) through the PSCCH, and transmits SL data through the PSSCH. For example, in the same time resource as the time resource as the PSSCH, the terminal 20A may transmit SCI (PSCCH) using a frequency resource adjacent to the frequency resource of the PSSCH.

The terminal 20B receives the SCI (PSCCH) and SL data (PSSCH) transmitted from the terminal 20A. The SCI received in the PSCCH may include information of a resource of a PSFCH with which the terminal 20B transmits a HARQ-ACK in response to the reception of the data. The terminal 20A may transmit information of the autonomously selected resource in such a manner that the information is included in the SCI.

In step S104, the terminal 20B uses the resource of the PSFCH designated by the received SCI to transmit a HARQ-ACK in response to the received data to the terminal 20A.

In step S105, in a case where the HARQ-ACK received in step S104 indicates request for retransmission, i.e., the HARQ-ACK received in step S104 is a NACK (negative response), the terminal 20A retransmits a PSCCH and PSSCH to the terminal 20B. The terminal 20A may retransmit a PSCCH and PSSCH by using the autonomously selected resource.

In a case where the HARQ control is not executed, it is not necessary to execute step S104 and step S105.

FIG. 11 is a drawing illustrating an example (2) of a configuration and an operation of the wireless communication system according to the embodiment of the present invention. A blind retransmission may be executed without relying on HARQ control in order to improve the success rate or range of transmission.

In step S201, the terminal 20A autonomously selects a resource used for a PSCCH and PSSCH from a resource selection window having a predetermined period. The resource selection window may be configured by the base station 10 for the terminal 20.

In step S202 and step S203, the terminal 20A uses the resource autonomously selected in step S201 to transmit the SCI through the PSCCH and transmit the SL data through the PSSCH. For example, in the same time resource as the time resource as the PSSCH, the terminal 20A may transmit SCI (PSCCH) using a frequency resource adjacent to the frequency resource of the PSSCH.

In step S204, the terminal 20A uses the resource autonomously selected in step S201 to retransmit the SCI through the PSCCH and the SL data through the PSSCH to the terminal 20B. The retransmission in step S204 may be executed multiple times.

In a case where the blind retransmission is not executed, it is not necessary to execute step S204.

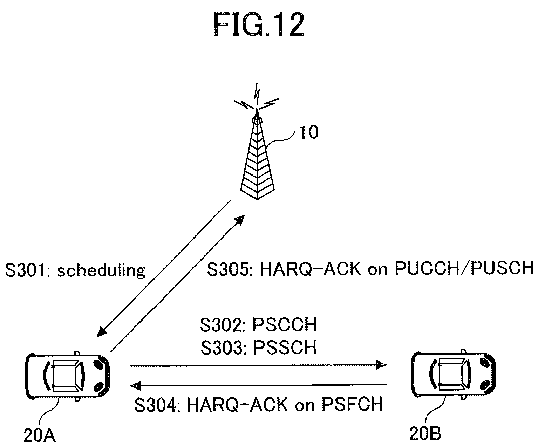

FIG. 12 is a drawing illustrating an example (3) of a configuration and an operation of the wireless communication system according to the embodiment of the present invention. The base station 10 may perform scheduling of sidelinks. Specifically, the base station 10 may determine the resource of the sidelink used by the terminal 20, and may transmit information indicating the resource to the terminal 20. Further, when a HARQ control is applied, the base station 10 may transmit information indicating the resource of the PSFCH to the terminal 20.

In step S301, the base station 10 performs SL scheduling by transmitting DCI (Downlink Control Information) through the PDCCH to the terminal 20A. Hereinafter, for the sake of convenience, DCI for SL scheduling is referred to as SL scheduling DCI.

In step S301, it is assumed that the base station 10 also transmits, to the terminal 20A, DCI for DL scheduling (which may be referred to as DL allocation) through the PDCCH. Hereinafter, for the sake of convenience, DCI for DL scheduling is referred to as DL scheduling DCI. The terminal 20A having received the DL scheduling DCI uses the resource designated by the DL scheduling DCI to receive DL data through a PDSCH.

In step S302 and step S303, the terminal 20A uses a resource designated by the SL scheduling DCI to transmit SCI (Sidelink Control Information) through the PSCCH, and transmit SL data through the PSSCH. In the SL scheduling DCI, only the resource of the PSSCH may be designated. In this case, for example, in the same time resource as the time resource as the PSSCH, the terminal 20A may transmit SCI (PSCCH) using a frequency resource adjacent to the frequency resource of the PSSCH.

The terminal 20B receives SCI (PSCCH) and SL data (PSSCH) transmitted from the terminal 20A. The SCI received through the PSCCH includes information of the resource of the PSFCH with which the terminal 20B transmits a HARQ-ACK in response to the reception of the data.

The information about the resource is included in the DL scheduling DCI or SL scheduling DCI transmitted from the base station 10 in step S301, and the terminal 20A obtains the information about the resource from the DL scheduling DCI or SL scheduling DCI and puts the information about the resource into the SCI. Alternatively, it may be assumed that the DCI transmitted from the base station 10 is not included in the information about the resource, and the terminal 20A may autonomously transmit the information about the resource included in the SCI.

In step S304, the terminal 20B uses the resource of the resource of the PSFCH designated by the received SCI to transmit a HARQ-ACK in response to the received data to the terminal 20A.

In step S305, for example, with the timing designated by the DL scheduling DCI (or the SL scheduling DCI) (for example, timing in units of slots), the terminal 20A uses the PUCCH (Physical uplink control channel) resource designated by the DL scheduling DCI (or the SL scheduling DCI) to transmit a HARQ-ACK, and the base station 10 receives the HARQ-ACK. The codebook of the HARQ-ACK may include the HARQ-ACK received from the terminal 20B and the HARQ-ACK in response to the DL data. However, in a case where, e.g., the DL data is not allocated, the HARQ-ACK in response to the DL data is not included.

In a case where the HARQ control is not executed, it is not necessary to execute step S304 and step S305.

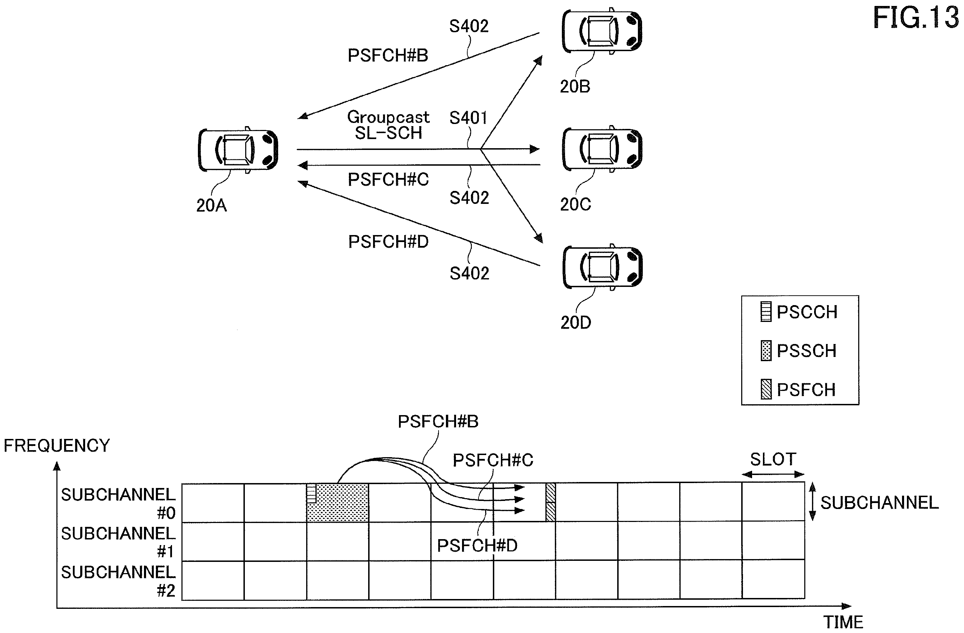

FIG. 13 is a drawing illustrating an example (4) of an operation according to the embodiment of the present invention. As described above, in the sidelink of the NR, transmission of the HARQ response by a PSFCH is supported. As the format of the PSFCH, it may be possible to use a format that is similar to a PUCCH (Physical Uplink Control Channel) format 0. Specifically, in the format of the PSFCH, the PRB (Physical Resource Block) size is 1, and an ACK and NACK may be a format in a sequence base that is identified by a difference in the sequence. The format of the PSFCH is not limited thereto. The resource of the PSFCH may be arranged in a symbol at the end or multiple symbols at the end of the slot. In the PSFCH resource, whether a cycle N is configured is specified in advance. The cycle N may be configured in units of slots or may be specified in advance.

In FIG. 13, the vertical axis corresponds to a frequency area, and the horizontal axis corresponds to a time area. The PSCCH may be arranged in
the first symbol at the start of the slot, multiple symbols at the start of the slot, or multiple symbols starting from a symbol other than the start of the slot. The PSFCH may be arranged in the last symbol at the end of the slot or multiple symbols at the end of the slot. In the example as illustrated in FIG. 13, three subchannels are configured in the resource pool, and two PSFCHs are arranged three slots after the slot in which the PSSCH is arranged. Arrows from the PSSCH to the PSFCH indicate examples of PSFCHs associated with the PSSCH.

In a case where the HARQ response in the groupcast of the NR-V2X is Option 2 for transmitting an ACK or NACK, it is necessary to determine the resource used for transmission and reception of the PSFCHs. As illustrated in FIG. 13, in step S401, the terminal 20A, i.e., the transmission-side terminal 20, executes groupcast via an SL-SCH to the terminal 20B, the terminal 20C, and the terminal 20D, i.e., the reception side terminals 20. In step S402 subsequent to step S402, the terminal 20B uses a PSFCH#B, the terminal 20C uses a PSFCH#C, and the terminal 20D uses a PSFCH#D to transmit a HARQ response to the terminal 20A. Herein, as illustrated in the example of FIG. 13, in a case where the number of available resources of PSFCH is less than the number of reception side terminals 20 which belongs to the group, it is necessary to determine how to allocate the resource of the PSFCH. The transmission-side terminal 20 may have information about the number of reception side terminals 20 in the groupcast.

In this case, sidelink enhancements of NR sidelinks, power saving has been considered. The random resource selection and partial sensing in the LTE and the resource allocation mode 2 in the NR are considered to be the baseline of the power saving operation.

However, the HARQ response in the sidelink is a function that was not supported in LTE, and the power saving of operations related to HARQ responses has not been considered. By advancing not only the power saving of the sensing and the like in resource allocation but also the power saving of PSFCH for seding and receving a HARQ response, the power saving of the entire system can be achieved.

Therefore, in a case where a particular parameter is configured or specified in advance, at least any one of the following A) to d) may be applied. It should be noted that the particular parameter may be configured by another terminal by RRC signaling of a sidelink. For example, the particular parameter may be a parameter for decreasing the sensing targets and/or selection candidates. For example, the particular parameter may be a parameter for an instruction of not executing a particular operation such as PSCCH decoding and the like. For example, the particular parameter may be a parameter for instructing a transition into the power saving state. For example, it may be a parameter for notifying that the reception side UE is in a power saving state. The parameter may be read as a signal, and the configuration may be read as a reception.

As the states, there are a power saving state and a normal state, and in a power saving state in which less power is consumed than in the normal state, the terminal 20 may execute an operation for reducing the power consumption, i.e., at least one of A) to D). The power saving state may also be referred to as a power saving mode.

### A) An operation for feeding back only NACK is applied.

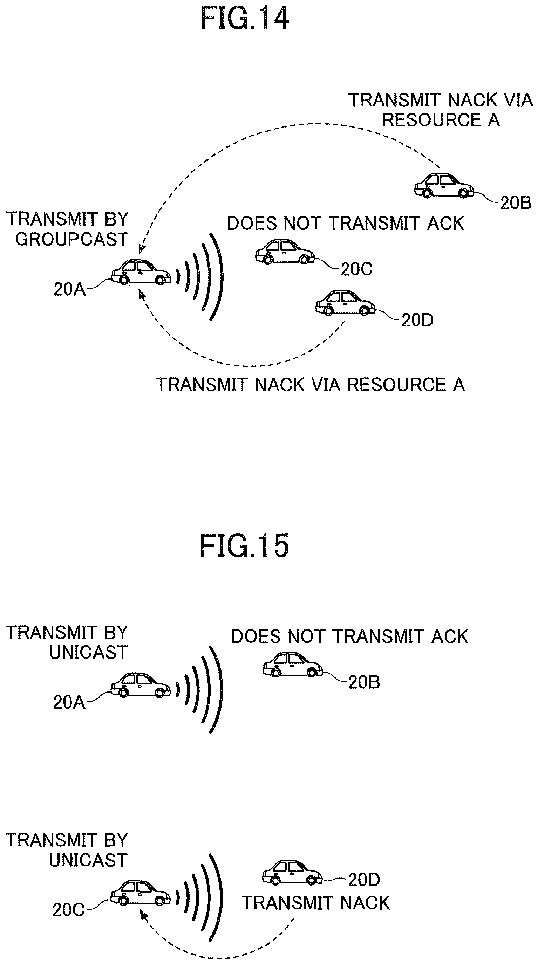

FIG. 14 is a drawing illustrating an example (1) of a HARQ response according to the embodiment of the present invention. As illustrated in FIG. 14, in a case where the terminal 20A transmits a groupcast, the terminal 20B and the terminal 20D fail to receive the groupcast, and accordingly, feed back NACKs via the resource A to the terminal 20A. In contrast, the terminal 20B having successfully received the group cast does not feed an ACK back to the terminal 20A.

FIG. 15 is a drawing illustrating an example (2) of a HARQ response according to the embodiment of the present invention. As illustrated in FIG. 15, in a case where the terminal 20A transmits unicast to the terminal 20B, and the terminal 20B successfully receives the unicast, the terminal 20B does not feed an ACK back to the terminal 20A. In contrast, in a case where the terminal 20C transmits unicast to the terminal 20D, and the terminal 20D fails to receive the unicast, the terminal 20D feeds a NACK back to the terminal 20C. Note that m_CS for calculating a cyclic shift a of the PSFCH format 0 may be specified as 0 in the case of NACK.

In a manner as described above, in a case where a sidelink is successfully received, it is not necessary to perform a feedback, and in a case where a sidelink is failed to be received, a NACK may be fed back. In operations for feeding back only NACKs, valid and invalid may be notified by the RRC signaling of a sidelink. Note that the distance-based feedback may or need not be applied at the same time. The distance-based feedback means an operation that does not transmit a feedback when it is detected that the distance between the terminal 20 is more than a predetermined distance.

By applying the operation shown in A) above, the number of PSFCH transmissions can be reduced and the power saving can be achieved.

### B) PSFCH is transmitted and/or received only at a particular timing

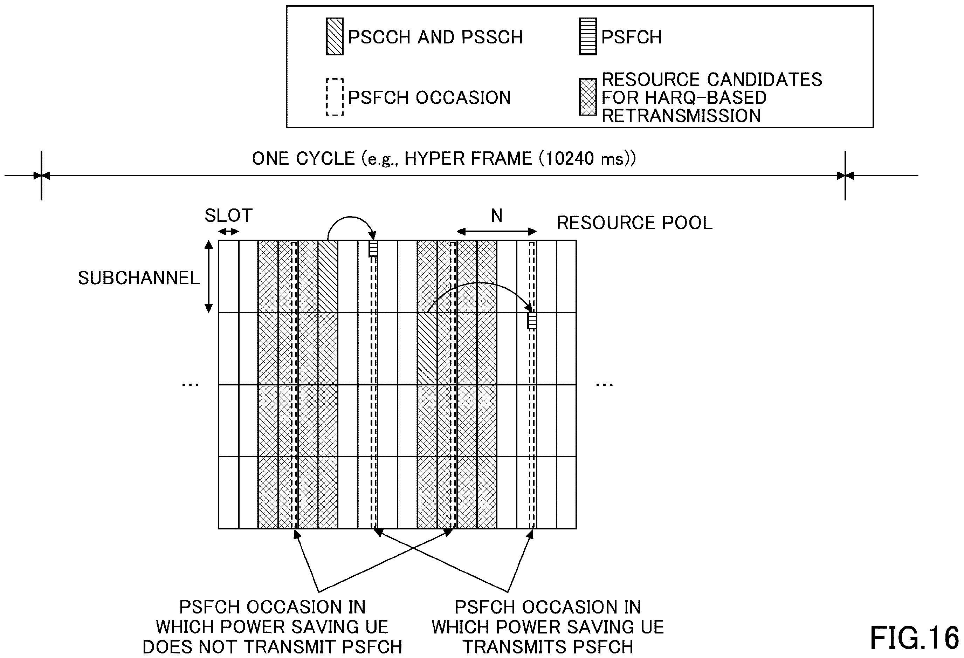

The timing of transmitting and receiving a PSFCH may be indicated by RRC signaling of a sidelink. FIG. 16 is a figure illustrating an example of resource pool according to the embodiment of the present invention. As illustrated in FIG. 16 the resource pool may be configured with, for example, a hyper frame of 10240 ms being one cycle. As illustrated in FIG. 16, the terminal 20 in the power saving state may use a PSFCH occasion in every N slots in every M times. In other words, the terminal 20 in the power saving state may transmit a PSFCH in a PSFCH occasion in every N*M slots. FIG. 16 is an example where N=4 and M=2. The PSCCH and PSSCH corresponding to the PSFCH occasion to be used can be used as resource candidates for HARQ-based retransmission. Therefore, the transmission-side terminal 20 intends a HARQ-based retransmission, resource candidates of the HARQ-based retransmission may be selected from the resource selection window. Further, for each terminal 20, a specific offset may be configured, and the specific offset may be set to a different value for each cycle of the resource pool. Note that the above parameter N or M may be indicated by RRC signaling from another terminal 20. Note that the terminal 20 in the normal state may transmit a PSFCH by using all the PSFCH occasions illustrated in FIG. 16.

For example, a value of N>4 may be configured or specified in advance, and the PSFCH occasion in every N slots may be configured in the resource pool. The "N" may be a value that is referred to by only the terminal 20 in the power saving state.

For example, N for a PSFCH occasion for transmission and N for a PSFCH occasion for reception may be configured individually. Further, a specific offset may be configured for each terminal 20, and the specific offset may be set to a different value for each cycle of the resource pool.

By applying the operation shown in B) above, the number of PSFCH transmissions can be reduced and the power saving can be achieved.

### C) HARQ feedback is not performed

Not requesting a HARQ feedback may be configured or instructed. Also, even when a HARQ feedback is requested, a configuration/specification for not causing the reception side terminal 20 to perform a HARQ feedback may be configured or specified. Also, permitting only broadcast may be configured or specified.

By applying the operation shown in C) above, the number of PSFCH transmissions can be reduced and the power saving can be achieved.
D) Reporting to the base station 10 that the terminal 20 of the transmission destination is in a power saving state.

The terminal 20 may report to the base station 10 that the terminal 20 of the transmission destination is in a power saving state via different SR (Scheduling request) resources. Also, the terminal 20 may report to the base station 10 that the terminal 20 of the transmission destination is in a power saving state via a BSR (Buffer status report). Also, the terminal 20 may report, to the base station 10, information about a PSFCH occasion that the terminal 20 of the transmission destination can transmit.

By applying the operation shown in D) above, a HARQ-based retransmission can be effectively used in the power saving state.

According to the embodiment explained above, the terminal 20 can reduce the number of PSFCH transmissions in the power saving state than in the normal state.

In other words, the power consumption for an operation of HARQ (Hybrid automatic repeat request) response in inter-terminal direct communication can be reduced.

### <Apparatus configuration>

Next, an example of functional configuration of the base station 10 and the terminal 20 that execute the processing and operations described so far will be described. The base station 10 and the terminal 20 include a function for implementing the above-described embodiment. However, each of the base station 10 and the terminal 20 may have only a subset of the functions in the embodiment.

### <Base station 10>

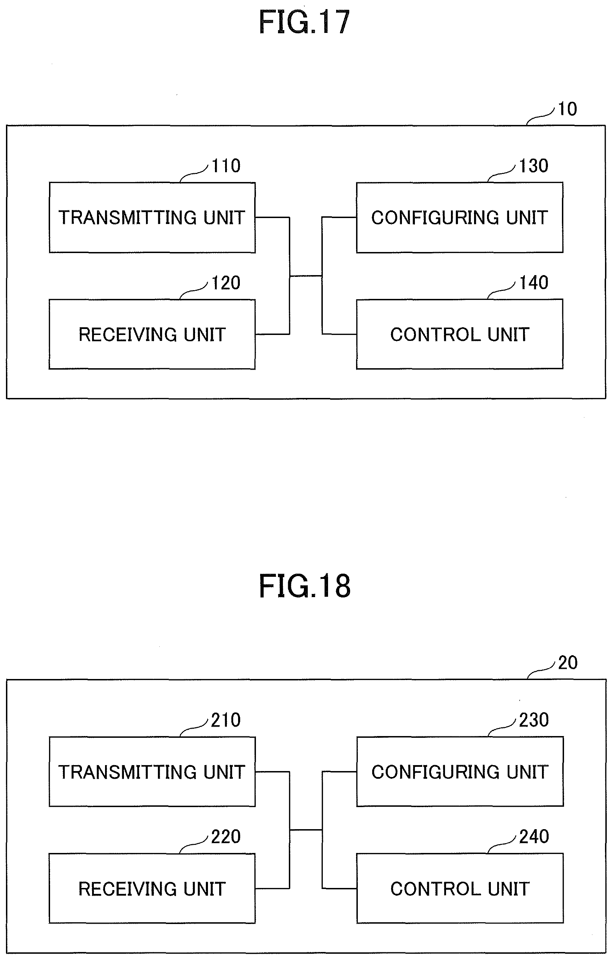

FIG. 17 is a drawing illustrating an example of a functional configuration of the base station 10. As illustrated in FIG. 17, the base station 10 includes a transmitting unit 110, a receiving unit 120, a configuring unit 130, and a control unit 140. The functional configuration illustrated in FIG. 17 is only an example. As long as the operation according to the embodiment of the present invention can be executed, the functions may be divided in any way, and the functional units may be given any names.

The transmitting unit 110 includes a function of generating signals to be transmitted to the terminal 20 and wirelessly transmitting the signals. The receiving unit 120 includes a function of wirelessly receiving various types of signals transmitted from the terminal 20 and acquiring, for example, information on a higher layer from the received signals. Further, the transmitting unit 110 has a function of transmitting NR-PSS, NR-SSS, NR-PBCH, a DL/UL control signal, a DL reference signal, and the like to the terminal 20.

The configuring unit 130 stores configuration information configured in advance and various configuration information to be transmitted to the terminal 20 in a storage device and reads out the configuration information from the storage device as needed. The contents of the configuration information include, for example, information about D2D communication.

As described in the embodiment, the control unit 140 performs processing of configuration with which the terminal 20 performs D2D communication. In addition, the control unit 140 transmits scheduling of D2D communication and DL communication via the transmitting unit 110 to the terminal 20. In addition, the control unit 140 receives information of HARQ responses of D2D communication and DL communication via the receiving unit 120 from the terminal 20. A functional unit configured to transmit signals in the control unit 140 may be included in the transmitting unit 110, and a functional unit configured to receive signals in the control unit 140 may be included in the receiving unit 120.

### <Terminal 20>

FIG. 18 is a drawing illustrating an example of a functional configuration of the terminal 20 according to the embodiment of the present invention. As illustrated in FIG. 18, the terminal 20 includes a transmitting unit 210, a receiving unit 220, a configuring unit 230, and a control unit 240. The functional configuration illustrated in FIG. 18 is merely an example. As long as the operation according to the embodiment of the present invention can be executed, the functions may be divided in any way, and the function units may be given any names.

The transmitting unit 210 generates a transmission signal from transmission data and wirelessly transmits the transmission signal. The receiving unit 220 wirelessly receives various types of signals, and acquires a signal in a higher-layer from the received signal in the physical layer. Also, the receiving unit 220 has a function of receiving NR-PSS, NR-SSS, NR-PBCH, DL/UL/SL control signals, reference signals, and the like that are transmitted from the base station 10. Also, for example, in D2D communication, the transmitting unit 210 transmits, to another terminal 20, a PSCCH (Physical Sidelink Control Channel), a PSSCH (Physical Sidelink Shared Channel), a PSDCH (Physical Sidelink Discovery Channel), a PSBCH (Physical Sidelink Broadcast Channel), and the like. The receiving unit 220 receives the PSCCH, the PSSCH, the PSDCH, the PSBCH, and the like, from the another terminal 20.

The configuring unit 230 stores various types of configuration information received from the base station 10 or a terminal 20 by the receiving unit 220 in a storage device and reads out the configuration information from the storage device as needed. The configuring unit 230 also stores configuration information configured in advance. The contents of the configuration information include, for example, information about configuration of D2D communication and information about power saving.

As described in the embodiment, the control unit 240 controls D2D communication with another terminal 20 and the power saving state. In addition, the control unit 240 performs processing of HARQ of D2D communication and DL communication. In addition, the control unit 240 transmits, to the base station 10, information of HARQ responses of D2D communication to another terminal 20 scheduled by the base station 10 and DL communication. In addition, the control unit 240 may schedule D2D communication for another terminal 20. In addition, the control unit 240 may autonomously select a resource used from D2D communication from a resource selection window, on the basis of a result of sensing. In addition, the control unit 240 performs processing of MCS in transmission and reception of D2D communication. A functional unit configured to transmit signals in the control unit 240 may be included in the transmitting unit 210, and a functional unit configured to receive signals in the control unit 240 may be included in the receiving unit 220.

### <Hardware configuration>

The block diagrams (FIGs. 17 and 18) used for explaining the above embodiments illustrate blocks in units of functions. These functional blocks (constituting units) are implemented by any combinations of at least one of hardware and software. In this regard, a method for implementing the various functional blocks is not particularly limited. That is, each functional block may be implemented by one device united physically and logically. Alternatively, each functional block may be implemented by connecting directly or indirectly (for example, in a wired or wireless manner) two or more devices that are physically or logically separated and connected together and using these multiple devices. The functional block may be implemented by combining software with the single device or multiple devices.

Functions include, but are not limited to, determining, calculating, processing, deriving, investigating, searching, confirming, receiving, transmitting, outputting, accessing, resolving, selecting, establishing, comparing, assuming, expecting, considering, broadcasting, notifying, communicating, forwarding, configuring, reconfiguring, allocating, mapping, assigning, and the like. For example, a functional block (constituting unit) that has a function of transmitting is referred to as a transmitting unit or a transmitter. As described above, a method for implementing these functions is not particularly limited.

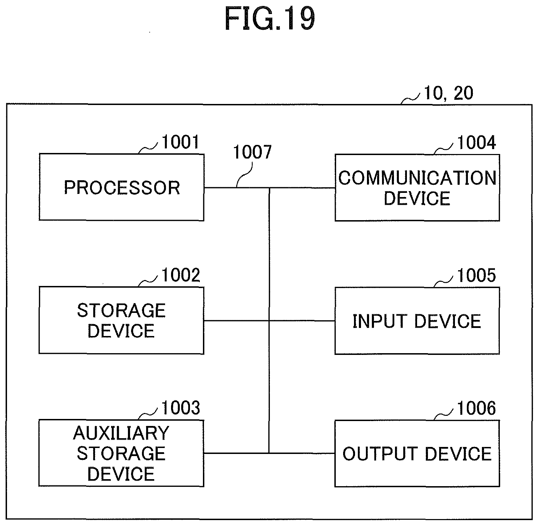

For example, the base station 10, the terminal 20, and the like according to one embodiment of the present disclosure may function as a computer that performs processing of a wireless communication according to the present disclosure. FIG. 19 is a drawing illustrating an example of a hardware configuration of the base station 10 or the terminal 20 according to an embodiment of the present disclosure. Each of the base station 10 and terminal 20 may be physically configured as a computer device including a processor 1001, a storage device 1002, an auxiliary storage device 1003, a communication device 1004, an input device 1005, an output device 1006, a bus 1007, and the like.

It is noted that, in the following description, the term "device" may be read as a circuit, an apparatus, a unit, or the like. The hardware configurations of the base station 10 and the terminal 20 may be configured to include one or more of the devices illustrated in drawings, or may be configured not to include some of the devices.

Each function of the base station 10 and the terminal 20 may be implemented by reading predetermined software (program) to hardware such as the processor 1001, the storage device 1002, or the like, causing the processor 1001 to perform operations, controlling communication by the communication device 1004, and controlling at least one of reading and writing of data in the storage device 1002 and the auxiliary storage device 1003.

The processor 1001 executes, for example, an operating system to control the overall operation of the computer. The processor 1001 may be a central processing unit (CPU) including an interface with peripheral devices, a control device, an arithmetic device, a register, and the like. For example, the control unit 140, the control unit 240, and the like described above may be realized by the processor 1001.

The processor 1001 reads a program (program code), a software module, or data from at least one of the auxiliary storage device 1003 and the communication device 1004 onto the storage device 1002, and performs various processes according to the program, the software module, or the data. As the program, a program that causes a computer to perform at least some of the operations described in the embodiment explained above is used. For example, the control unit 140 of the base station 10, as illustrated in FIG. 17, may be implemented by a control program that is stored in the storage device 1002 and that is executed by the processor 1001. Also, for example, the control unit 240 of the terminal 20, as illustrated in FIG. 18, may be implemented by a control program that is stored in the storage device 1002 and that is executed by the processor 1001. Explanation has been provided above for the case in which the above various processing are performed by the single processor 1001. However, such processing may be simultaneously or sequentially performed by two or more processors 1001. The processor 1001 may be implemented with one or more chips. It is noted that the program may be transmitted from a network through an electronic communication line.

The storage device 1002 is a computer-readable recording medium and may be constituted by at least one of, for example, a ROM (Read Only Memory), an EPROM (Erasable Programmable ROM), an EEPROM (Electrically Erasable Programmable ROM), a RAM (Random Access Memory), and the like. The storage device 1002 may also be referred to as a register, a cache, a main memory (main storage device), or the like. The storage device 1002 can store a program (program code), a software module and the like that can be executed to perform a communication method according to an embodiment of the present disclosure.

The auxiliary storage device 1003 is a computer-readable recording medium and may be configured by at least one of, for example, an optical disk such as a CD-ROM (Compact Disc ROM), a hard disk drive, a flexible disk, a magneto-optical disk (for example, a compact disk, a digital versatile disk, or a Blu-ray (registered trademark) disk), a smart card, a flash memory (for example, a card, a stick, or a key drive), a floppy (registered trademark) disk, a magnetic strip, and the like. The above storage medium may be, for example, a database, a server, or other appropriate media including at least one of the storage device 1002 and the auxiliary storage device 1003.

The communication device 1004 is hardware (a transmission and reception device) for performing communication between computers through at least one of a wired network and a wireless network and may also be referred to as, for example, a network device, a network controller, a network card, a communication module, or the like. The communication device 1004 may include, for example, a radio frequency switch, a duplexer, a filter, a frequency synthesizer, or the like to implement at least one of a frequency division duplex (FDD) and a time division duplex (TDD). For example, a transmission and reception antenna, an amplifier, a transmitting and receiving unit, a transmission line interface, and the like may be implemented by the communication device 1004. The transmitting and receiving unit may be implemented in such a manner that a transmitting unit and a receiving unit are physically or logically separated.

The input device 1005 is an input device (for example, a keyboard, a mouse, a microphone, a switch, a button, a sensor, or the like) that receives an input from the outside. The output device 1006 is an output device (for example, a display, a speaker, an LED lamp, or the like) that performs an output to the outside. It is noted that the input device 1005 and the output device 1006 may be integrated with each other (for example, a touch panel).

The devices, such as the processor 1001 and the storage device 1002, are connected to each other via a bus 1007 for communicating information. The bus 1007 may be constituted by using a single bus, or may be constituted by using busses different depending on devices.

The base station 10 and the terminal 20 may include hardware, such as a microprocessor, a digital signal processor (DSP), an ASIC (Application Specific Integrated Circuit), a PLD (Programmable Logic Device), or an FPGA (Field Programmable Gate Array), or alternatively, some or all of the functional blocks may be implemented by the hardware. For example, the processor 1001 may be implemented with at least one of these hardware components.

### <Summary of Embodiment>

As described above, according to the embodiment of the present invention, provided is a terminal including a receiving unit configured to receive data from another terminal, a control unit configured to control a response of retransmission processing of the data, based on whether the terminal is in a power saving state or in a normal state, and a transmitting unit configured to transmit, to the another terminal, the response of retransmission processing of the data.

According to the above configuration, the terminal 20 can reduce the number of PSFCH transmissions in the power saving state than in the normal state. In other words, the power consumption for an operation of HARQ (Hybrid automatic repeat request) response in inter-terminal direct communication can be reduced.

The receiving unit may receive, from the another terminal, an instruction for transitioning to the power saving state, and the control unit may cause the state to transition to the power saving state, based on the instruction. According to the above configuration, the terminal 20 can reduce the number of PSFCH transmissions in the power saving state than in the normal state.

In a case where the response of retransmission processing of the data is a positive response, the control unit may determine that the response of retransmission processing of the data is not to be transmitted. According to the above configuration, the terminal 20 can reduce the number of PSFCH transmissions in the power saving state than in the normal state.

The control unit may cause a number of candidates in which a channel for transmitting or receiving the response of the retransmission processing is arranged for a case in which the state is the power saving state, to be less than a number of candidates in which a channel for transmitting or receiving the response of the retransmission processing is arranged for a case in which the state is the normal state. According to the above configuration, the terminal 20 can reduce the number of PSFCH transmissions in the power saving state than in the normal state.

The receiving unit receives retransmission of the data in a channel of data corresponding to the candidates in which the channel for transmitting or receiving the response of the retransmission processing is arranged for a case in which the state is the power saving state. According to the above configuration, the terminal 20 can reduce the number of PSFCH transmissions in the power saving state than in the normal state.

As described above, according to the embodiment of the present invention, provided is a communication method executed by a terminal, including receiving data from another terminal, controlling a response of retransmission processing of the data, based on whether the terminal is in a power saving state or in a normal state, and transmitting, to the another terminal, the response of retransmission processing of the data.

According to the above configuration, the terminal 20 can reduce the number of PSFCH transmissions in the power saving state than in the normal state. In other words, the power consumption for an operation of HARQ (Hybrid automatic repeat request) response in inter-terminal direct communication can be reduced.

### <Supplements to Embodiment>

The embodiment of the present invention has been described above, but the disclosed invention is not limited to the above embodiment, and those skilled in the art would understand that various modified examples, revised examples, alternative examples, substitution examples, and the like can be made. In order to facilitate understanding of the present invention, specific numerical value examples are used for explanation, but the numerical values are merely examples, and any suitable values may be used unless otherwise stated. Classifications of items in the above description are not essential to the present invention, contents described in two or more items may be used in combination if necessary, and contents described in an item may be applied to contents described in another item (unless a contradiction arises). The boundaries between the functional units or the processing units in the functional block diagrams do not necessarily correspond to the boundaries of physical components. Operations of a plurality of functional units may be physically implemented by a single component and an operation of a single functional unit may be physically implemented by a plurality of components. Concerning the processing procedures described above in the embodiments, the orders of steps may be changed unless a contradiction arises. For the sake of convenience for describing the processing, the base station 10 and the terminal 20 have been described with the use of the functional block diagrams, but these apparatuses may be implemented by hardware, software, or a combination thereof. Each of software functioning with a processor of the base station 10 according to the embodiment of the present invention and software functioning with a processor of the terminal 20 according to the embodiment of the present invention may be stored in a random access memory (RAM), a flash memory, a read-only memory (ROM), an EPROM, an EEPROM, a register, a hard disk (HDD), a removable disk, a CD-ROM, a database, a server, or any suitable recording media.

Also, the notification of information is not limited to the aspect or embodiment described in the present disclosure, but may be performed by other methods. For example, the notification of information may be performed by physical layer signaling (for example, DCI (Downlink Control Information), UCI (Uplink Control Information)), higher layer signaling (for example, RRC (Radio Resource Control) signaling, MAC (Medium Access Control) signaling, broadcast information (an MIB (Master Information Block) and an SIB (System Information Block)), other signals, or combinations thereof. The RRC signaling may be also be referred to as an RRC message and may be, for example, an RRC connection setup message, an RRC connection reconfiguration message, or the like.

Each aspect and embodiment described in the present disclosure may be applied to at least one of a system that uses a suitable system such as LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (New Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), or Bluetooth (registered trademark), and a next-generation system expanded on the basis thereof. Also, a plurality of systems may be combined and applied (for example, a combination of at least one of LTE and LTE-A with 5G, and the like).

In the operation procedures, sequences, flowcharts, and the like according to each aspect and embodiment described in the present disclosure, the orders of steps may be changed unless a contradiction arises. For example, in the methods described in the present disclosure, elements of various steps are illustrated by using an exemplary order and the methods are not limited to the specific orders presented.

The specific operations performed by the base station 10 described in the present disclosure may in some cases be performed by an upper node. It is clear that, in a network that includes one or more network nodes including the base station 10, various operations performed for communication with the terminal 20 can be performed by at least one of the base station 10 and another network node other than the base station 10 (for example, a MME, a S-GW, or the like may be mentioned, but not limited thereto). In the above, the description has been made for the case where another network node other than the base station 10 is a single node as an example. But the another network node may be a combination of a plurality of other network nodes (for example, a MME and a S-GW).

Information, signals, or the like described in the present disclosure may be output from a higher layer (or a lower layer) to a lower layer (or a higher layer). Information, signals, or the like described in the present disclosure may be input and output via a plurality of network nodes.

Information or the like that has been input or output may be stored at a predetermined place (for example, a memory) and may be managed with the use of a management table. Information or the like that is input or output can be overwritten, updated, or appended. Information or the like that has been output may be deleted. Information or the like that has been input may be transmitted to another apparatus.

In the present disclosure, determination may be made with the use of a value expressed by one bit (0 or 1), may be made with the use of a Boolean value (true or false), and may be made through a comparison of numerical values (for example, a comparison with a predetermined value).

Regardless of whether software is referred to as software, firmware, middleware, microcode, a hardware description language, or another name, software should be interpreted broadly to mean instructions, instruction sets, codes, code segments, program codes, a program, a subprogram, a software module, an application, a software application, a software package, a routine, a subroutine, an object, an executable file, an execution thread, a procedure, a function, and the like.

Software, instructions, information, or the like may be transmitted and received through transmission media. For example, in a case where software is transmitted from a website, a server or another remote source through at least one of wired technology (such as a coaxial cable, an optical-fiber cable, a twisted pair, or a digital subscriber line (DSL)) and radio technology (such as infrared or microwaves), at least one of the wired technology and the radio technology is included in the definition of a transmission medium.

Information, signals, and the like described in the present disclosure may be expressed with the use of any one of various different technologies. For example, data, instructions, commands, information, signals, bits, symbols, chips, and the like mentioned herein throughout the above explanation may be expressed by voltages, currents, electromagnetic waves, magnetic fields or magnetic particles, optical fields or photons, or any combinations thereof.

The terms described in the present disclosure and the terms necessary for understanding the present disclosure may be replaced with terms having the same or similar meanings. For example, at least one of a channel and a symbol may be a signal (signaling). A signal may be a message. A component carrier (CC) may be referred to as a carrier frequency, a cell, a frequency carrier, or the like.

The terms "system" and "network" used in the present disclosure are used interchangeably.

Information, parameters, and the like described in the present disclosure may be expressed by absolute values, may be expressed by relative values with respect to predetermined values, and may be expressed by corresponding different information. For example, radio resources may be indicated by indexes.

The above-described names used for the parameters are not restrictive in any respect. In addition, formulas or the like using these parameters may be different from those explicitly disclosed in the present disclosure. Various channels (for example, a PUCCH, a PDCCH, and the like) and information elements can be identified by any suitable names, and therefore, various names given to these various channels and information elements are not restrictive in any respect.

In the present disclosure, terms such as "base station (BS)", "radio base station", "base station ", "fixed station", "NodeB", "eNodeB (eNB)", "gNodeB (gNB)", "access point", "transmission point", "reception point", "transmission/reception point", "cell", "sector", "cell group", "carrier", "component carrier", and the like may be used interchangeably. A base station may be referred to as a macro-cell, a small cell, a femtocell, a pico-cell, or the like.

A base station can accommodate one or a plurality of (for example, three) cells (that may be called sectors). In a case where a base station accommodates a plurality of cells, the whole coverage area of the base station can be divided into a plurality of smaller areas. For each smaller area, a base station subsystem (for example, an indoor miniature base station RRH (Remote Radio Head)) can provide a communication service. The term "cell" or "sector" denotes all or a part of the coverage area of at least one of a base station and a base station subsystem that provides communication services in the coverage.

In the present disclosure, terms such as "mobile station (MS)", "user terminal", "user equipment (UE)", and "terminal" may be used interchangeably.

By the person skilled in the art, a mobile station may be referred to as any one of a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, and other suitable terms.

At least one of a base station and a mobile station may be referred to as a transmitting apparatus, a receiving apparatus, a communication apparatus, or the like. At least one of a base station and a mobile station may be an apparatus mounted on a mobile body, or may be a mobile body itself, or the like. A mobile body may be a transporting device (e.g., a vehicle, an airplane, and the like), an unmanned mobile (e.g., a drone, an automated vehicle, and the like), or a robot (of a manned or unmanned type). It is noted that at least one of a base station and a mobile station includes an apparatus that does not necessarily move during a communication operation. For example, at least one of a base station and a mobile station may be an IoT (Internet of Thing) device such as a sensor.

In addition, a base station according to the present disclosure may be read as a user terminal. For example, each aspect or embodiment of the present disclosure may be applied to a configuration in which communication between a base station and a user terminal is replaced by communication between a plurality of terminals 20 (that may be called D2D (Device-to-Device), V2X (Vehicle-to-Everything), or the like). In this case, a terminal 20 may have above-described functions of the base station 10. In this regard, a word such as "up" or "down" may be read as a word corresponding to communication between terminals (for example, "side"). For example, an uplink channel, a downlink channel, or the like may be read as a side channel.

Similarly, a user terminal according to the present disclosure may be replaced with a base station. In this case, a base station may have above-described functions of the user terminal.

The term "determine" used herein may mean various operations. For example, judging, calculating, computing, processing, deriving, investigating, looking up, searching, inquiring (for example, looking up a table, a database, or another data structure), ascertaining, or the like may be deemed as making determination. Also, receiving (for example, receiving information), transmitting (for example, transmitting information), inputting, outputting, or accessing (for example, accessing data in a memory), or the like may be deemed as making determination. Also, resolving, selecting, choosing, establishing, comparing, or the like may be deemed as making determination. That is, doing a certain operation may be deemed as making determination. "To determine" may be read as "to assume", "to expect", "to consider", or the like.

Each of the terms "connected" and "coupled" and any variations thereof mean any connection or coupling among two or more elements directly or indirectly and can mean that one or a plurality of intermediate elements are inserted among two or more elements that are "connected" or "coupled" together. Coupling or connecting among elements may be physical one, may be logical one, and may be a combination thereof. For example, "connecting" may be read as "accessing". In a case where the terms "connected" and "coupled" and any variations thereof are used in the present disclosure, it may be considered that two elements are "connected" or "coupled" together with the use of at least one type of a medium from among one or a plurality of wires, cables, and printed conductive traces, and in addition, as some non-limiting and non-inclusive examples, it may be considered that two elements are "connected" or "coupled" together with the use of electromagnetic energy such as electromagnetic energy having a wavelength of the radio frequency range, the microwave range, or the light range (including both of the visible light range and the invisible light range).

A reference signal can be abbreviated as an RS (Reference Signal). A reference signal may be referred to as a pilot depending on an applied standard.

A term "based on" used in the present disclosure does not mean "based on only" unless otherwise specifically noted. In other words, a term "base on" means both "based on only" and "based on at least".

Any references to elements denoted by a name including terms such as "first" or "second" used in the present disclosure do not generally limit the amount or the order of these elements. These terms can be used in the present disclosure as a convenient method for distinguishing one or a plurality of elements. Therefore, references to first and second elements do not mean that only the two elements can be employed or that the first element should be, in some way, prior to the second element.

"Means" in each of the above apparatuses may be replaced with "unit", "circuit", "device", or the like.

In a case where any one of "include", "including", and variations thereof is used in the present disclosure, each of these terms is intended to be inclusive in the same way as the term "comprising". Further, the term "or" used in the present disclosure is intended to be not exclusive-or.

A radio frame may include, in terms of time domain, one or a plurality of frames. Each of one or a plurality of frames may be referred to as a subframe in terms of time domain. A subframe may include, in terms of time domain, one or a plurality of slots. A subframe may have a fixed time length (e.g., 1 ms) independent of Numerology.

Numerology may be a communication parameter that is applied to at least one of transmission and reception of a signal or a channel. Numerology may mean, for example, at least one of a subcarrier spacing (SCS), a bandwidth, a symbol length, a cyclic prefix length, a transmission time interval (TTI), the number of symbols per TTI, a radio frame configuration, a specific filtering processing performed by a transceiver in frequency domain, a specific windowing processing performed by a transceiver in time domain, and the like.

A slot may include, in terms of time domain, one or a plurality of symbols (OFDM (Orthogonal Frequency Division Multiplexing) symbols, SC-FDMA (Single Carrier Frequency Division Multiplexing) symbols) symbols, or the like). A slot may be a time unit based on Numerology.

A slot may include a plurality of minislots. Each minislot may include one or a plurality of symbols in terms of the time domain. A minislot may also be referred to as a subslot. A minislot may include fewer symbols than a slot. A PDSCH (or PUSCH) transmitted at a time unit greater than a minislot may be referred to as a PDSCH (or PUSCH) mapping type A. A PDSCH (or PUSCH) transmitted using minislots may be referred to as a PDSCH (or PUSCH) mapping type B.

Each of a radio frame, a subframe, a slot, a minislot, and a symbol means a time unit configured to transmit a signal. Each of a radio frame, a subframe, a slot, a minislot, and a symbol may be referred to as other names respectively corresponding thereto.

For example, one subframe may be referred to as a transmission time interval (TTI), a plurality of consecutive subframes may be referred to as a TTI, and one slot or one minislot may be referred to as a TTI. That is, at least one of a subframe and a TTI may be a subframe (1 ms) according to the existing LTE, may have a period shorter than 1 ms (e.g., 1 to 13 symbols), and may have a period longer than 1 ms. Instead of subframes, units expressing a TTI may be referred to as slots, minislots, or the like.

A TTI means, for example, a minimum time unit of scheduling in radio communication. For example, in an LTE system, a base station performs scheduling for each terminal 20 to assign, in TTI units, radio resources (such as frequency bandwidths, transmission power, and the like that can be used by each terminal 20). However, the definition of a TTI is not limited thereto.

A TTI may be a transmission time unit for channelcoded data packets (transport blocks), code blocks, code words, or the like, and may be a unit of processing such as scheduling, link adaptation, or the like. When a TTI is given, an actual time interval (e.g., the number of symbols) to which transport blocks, code blocks, code words, or the like are mapped may be shorter than the given TTI.

In a case where one slot or one minislot is referred to as a TTI, one or a plurality of TTIs (i.e., one or a plurality of slots or one or a plurality of minislots) may be a minimum time unit of scheduling. The number of slots (the number of minislots) included in the minimum time unit of scheduling may be controlled.

A TTI having a time length of 1 ms may referred to as an ordinary TTI (a TTI according to LTE Rel.8-12), a normal TTI, a long TTI, an ordinary subframe, a normal subframe, a long subframe, a slot, or the like. A TTI shorter than an ordinary TTI may be referred to as a shortened TTI, a short TTI, a partial or fractional TTI, a shortened subframe, a short subframe, a minislot, a subslot, a slot, or the like.

Note that a long TTI (for example, normal TTI, subframe, and the like) may be read as TTI having a time length exceeding 1 ms, and a short TTI (for example, shortened TTI) may be read as a TTI having a TTI length less than the TTI length of the long TTI and equal to or more than 1 ms.

A resource block (RB) is a resource assignment unit in terms of time domain and frequency domain and may include one or a plurality of consecutive subcarriers in terms of frequency domain. The number of subcarriers included in an RB may be the same regardless of Numerology, and, for example, may be 12. The number of subcarriers included in a RB may be determined based on Numerology.

In terms of time domain, an RB may include one or a plurality of symbols, and may have a length of 1 minislot, 1 subframe, or 1 TTI. Each of 1 TTI, 1 subframe, and the like may include one or a plurality of resource blocks.

One or a plurality of RBs may be referred to as physical resource blocks (PRBs: Physical RBs), a subcarrier group (SCG: Sub-Carrier Group), a resource element group (REG: Resource Element Group), a PRB pair, an RB pair, or the like.

A resource block may include one or a plurality of resource elements (RE: Resource Elements). For example, 1 RE may be a radio resource area of 1 subcarrier and 1 symbol.

A bandwidth part (BWP) (which may be called a partial bandwidth or the like) may mean a subset of consecutive common RBs (common resource blocks) for Numerology, in any given carrier. A common RB may be identified by a RB index with respect to a common reference point in the carrier. PRBs may be defined by a BWP and may be numbered in the BWP.

A BWP may include a BWP (UL BWP) for UL and a BWP (DL BWP) for DL. For the terminal 20, one or a plurality of BWPs may be set in 1 carrier.

At least one of BWPs that have been set may be active, and the terminal 20 need not assume sending or receiving a predetermined signal or channel outside the active BWP. A "cell", a "carrier" or the like in the present disclosure may be read as a "BWP".

The above-described structures of radio frames, subframes, slots, minislots, symbols, and the like are merely examples. For example, the number of subframes included in a radio frame, the number of slots included in a subframe or a radio frame, the number of minislots included in a slot, the number of symbols and the number of RBs included in a slot or a minislot, the number of subcarriers included in an RB, the number of symbols included in a TTI, a symbol length, a cyclic prefix (CP) length, and the like can be variously changed.

Throughout the present disclosure, in a case where an article such as "a", "an", or "the" in English is added through a translation, the present disclosure may include a case where a noun following such article is of a plural form.

Throughout the present disclosure, an expression that "A and B are different" may mean that "A and B are different from each other". Also, this term may mean that "each of A and B is different from C". Terms such as "separate" and "coupled" may also be interpreted in a manner similar to "different".

Each aspect or embodiment described in the present disclosure may be solely used, may be used in combination with another embodiment, and may be used in a manner of being switched with another embodiment upon implementation. Notification of predetermined information (for example, notification of "being x") may be implemented not only explicitly but also implicitly (for example, by not notifying predetermined information).

In the present disclosure, "PSFCH" is an example of a channel for transmitting or receiving a response of retransmission processing. "PSFCH opportunity" is an example of a candidate in which a channel for transmitting or receiving the response of the retransmission processing is arranged. "PSSCH" is an example of data.

Although the present disclosure has been described above, it will be understood by those skilled in the art that the present disclosure is not limited to the embodiment described in the present disclosure. Modifications and changes of the present disclosure may be possible without departing from the subject matter and the scope of the present disclosure defined by claims. Therefore, the descriptions of the present disclosure are for illustrative purposes only, and are not intended to be limiting the present disclosure in any way.

### Reference Signs List

- 10: base station
- 110: transmitting unit
- 120: receiving unit
- 130: configuring unit
- 140: control unit
- 20: terminal
- 210: transmitting unit
- 220: receiving unit
- 230: configuring unit
- 240: control unit
- 1001: processor
- 1002: storage device
- 1003: auxiliary storage device
- 1004: communication apparatus
- 1005: input device
- 1006: output device

## Claims

1. A terminal comprising:
a receiving unit configured to receive data from another terminal;
a control unit configured to control a response of retransmission processing of the data, based on whether the terminal is in a power saving state or in a normal state; and
a transmitting unit configured to transmit, to the another terminal, the response of retransmission processing of the data.

2. The terminal according to claim 1, wherein the receiving unit receives, from the another terminal, an instruction for transitioning to the power saving state, and
the control unit causes the state to transition to the power saving state, based on the instruction.

3. The terminal according to claim 1, wherein in a case where the response of retransmission processing of the data is a positive response, the control unit determines that the response of retransmission processing of the data is not to be transmitted.

4. The terminal according to claim 1, wherein the control unit causes a number of candidates in which a channel for transmitting or receiving the response of the retransmission processing is arranged for a case in which the state is the power saving state, to be less than a number of candidates in which a channel for transmitting or receiving the response of the retransmission processing is arranged for a case in which the state is the normal state.

5. The terminal according to claim 4, wherein the receiving unit receives retransmission of the data in a channel of data corresponding to the candidates in which the channel for transmitting or receiving the response of the retransmission processing is arranged for a case in which the state is the power saving state.

6. A communication method executed by a terminal, the communication method comprising:
receiving data from another terminal;
controlling a response of retransmission processing of the data, based on whether the terminal is in a power saving state or in a normal state; and
transmitting, to the another terminal, the response of retransmission processing of the data.
